# EUROPEAN PATENT SPECIFICATION

(11) **EP 2 605 480 B1**
(45) Date of publication and mention of the grant of the patent: **04.06.2014**
(21) Application number: 11306678.1
(22) Date of filing: 15.12.2011
(51) Int. Cl.: H04L 29/08, H04L 12/26, H04L 12/24

(54) **Apparatus and method for HTTP analysis**
Vorrichtung und Verfahren zur HTTP-Analyse
Appareil et procédé d'analyse HTTP

(43) Date of publication of application: 19.06.2013
(73) Proprietor: Mitsubishi Electric R&D Centre Europe B.V., 1119 NS Schiphol Rijk Amsterdam (NL); Mitsubishi Electric Corporation, Chiyoda-ku Tokyo 100-8310 (JP)
(72) Inventor: Rollet, Romain, 35590 L'Hermitage (FR)
(74) Representative: Cabinet Plasseraud

(56) References cited:
- US-A1- 2007 033 280
- US-A1- 2010 088 404
- US-B1- 7 103 675
- US-B1- 7 639 613

## Description

The present invention relates to the field of data communications, and more specifically to an apparatus and method for analysing Hypertext Transfer Protocol (HTTP) items.

Hypertext Transfer Protocol (HTTP) was standardised by the Internet Engineering Task Force (IETF) in Request for Comments 2616 (RFC 2616). One of the advantages of HTTP is its relatively small number of request methods. While the protocol supports a handful of different request methods (e.g. HEAD, GET, POST, PUT, DELETE, TRACE, OPTIONS, CONNECT, PATH), most applications will only use two or three of these (typically GET and POST). The simple structure and operation of HTTP does however introduce disadvantages for higher level applications.

In particular, HTTP was designed for maximum flexibility in terms of information transfer. Accordingly, HTTP communications issued by a single application are not embedded within a single identifiable session. HTTP requests relating to a single application are emitted independently from one another, and can each be transported by different Transmission Control Protocol (TCP) connections. For example, a web page can be made of a large number of different HTTP items (e.g. HyperText Markup Language (HTML) file, images, application scripts, etc), which can be downloaded from different web servers over dozens of different TCP connections.

While this flexibility represents an important contribution to the performance of HTTP as a protocol, it also poses significant challenges in terms of analysing HTTP flows with respect to a given session, application or user.

In order to try and overcome this disadvantage, prior art methods have been developed which use the Uniform Resource Locator (URL) part of each HTTP item in order to group various items together. This type of grouping is performed by, for example, parental control software and company firewall software, in an attempt to prevent users from accessing certain types of content.

One significant disadvantage with this method relates to the fact that most web sites use external resources, and can also have dedicated servers for different types of content. Accordingly, by using a simple URL classification, several HTTP items will be classified incorrectly. For example, in a situation in which an advert is inserted into a web page forming part of a sports news website, the advert is associated with an "advert class" (i.e. downloaded form an "advert" URL) and the web page is associated with the "sports news class" (i.e. downloaded from a "sports news" URL). Accordingly, the single user action of browsing a sports news website can generate multiple unrelated HTTP flow classifications.

Another disadvantage of this method is its inability to link successively downloaded items of web pages on a single web site, or type of web site. Typically, when performing a single user activity, such as, for example, searching for information or content, a user will browse several successive pages on a single web site, or type of web site. Using prior art methods, it is impossible to aggregate the HTTP item flows generated by that single user activity.

The document US2010/088404 discloses a method for monitoring of web services by correlating multiple transaction components between a network browser and one or more applications.

In order to solve the problems associated with the prior art, the present invention provides a method of analysing information in a TCP/IP network, which method comprises: receiving a plurality of HTTP Request and Response messages relating to a plurality of HTTP items being downloaded by a user; creating, upon receipt of each valid HTTP Response message relating to an HTTP item, an HTTP item object, the HTTP item object being associated with, and including information contained in, the HTTP Request and Response messages related to the HTTP item; linking the created HTTP item objects hierarchically using information in the Referer fields of their associated HTTP Request messages; and grouping a plurality of linked HTTP item objects together if the time between the receipt of their associated valid HTTP Response messages does not exceed a given threshold.

Preferably, the grouping step is triggered by the hierarchical linking of a given number of HTTP item objects on a first level of the hierarchy, to an HTTP item object on a second level of the hierarchy, the first level being lower in the hierarchy than the second level.

Preferably, the method further comprises the steps of: creating a web page object for each group of HTTP item objects; and determining, for each web page object, a root HTTP item object, the root HTTP item object being defined as the HTTP item object having an associated HTTP Request message having been received before the HTTP Request messages associated with the other HTTP item objects in the group of HTTP item objects.
Preferably, the method further comprises the steps of: receiving an HTTP Request and Response message relating to a further HTTP item being downloaded by the user; creating, upon receipt of a valid HTTP Response message relating to the further HTTP item, a further HTTP item object, the further HTTP item object being associated with, and including information contained in, the HTTP Request and Response messages related to the further HTTP item; linking the further HTTP item object to a previously created HTTP item object using the information in the Referer field of the HTTP Request message associated with the further HTTP item; and if the previously created HTTP item object is part of a group of HTTP item objects, associating the further HTTP item object to the web page object created in respect of the group of HTTP item objects if the time between the receipt of the last valid HTTP Response message in the group of HTTP item objects and the receipt of the valid HTTP Response message associated with the further HTTP item does not exceed the given threshold.

Preferably, the method further comprises the steps of: extracting domain information from the Host field of the HTTP Request message associated with each root HTTP item object; grouping a plurality of created web page objects together if: the Host fields of the HTTP Request messages associated with the root HTTP items of the plurality of web page objects contain matching information; and the valid HTTP Response messages associated with the root HTTP item objects of the plurality of web pages are received within a given period of time; and creating a web site session object for each group of web page objects.

Preferably, the method further comprises the steps of: associating the web site session object to a class of web site by matching the contents of the domain information of root HTTP item objects of the plurality of web page objects to a domain value in a web class database, the web class database comprising a plurality of domain values grouped by class of web site.

Preferably, the method further comprises the steps of: grouping the web site session objects which share the same web class; and created a web class session object for each group of web site session objects.

At least part of the HTTP item objects, the web page objects, the web site session objects and the web class session objects can be sent to a relational database and part of the preceding steps are performed by the relational database.

Preferably, each HTTP item object comprises an indication of the volume of data comprised in its associated HTTP item; and each of the web page objects, the web site session objects and the web class session objects comprise a total of the volumes of data indicated in the HTTP item objects to which they are hierarchically linked.

The present invention also provides a method of controlling access to the Internet which comprises the steps of: determining, using the above method, the total volume of data associated with a web class session; and limiting the amount of data transferred from a domain associated with the web class if the total volume of data exceeds a given threshold.

The present invention further provides a computer program product for a data-processing device, the computer program product comprising a set of instructions which, when loaded into the data-processing device, causes the device to perform the steps of the above method.

The present invention also provides a system for analysing information in a TCP/IP network, which system comprises: a receiver arranged to receive a plurality of HTTP Request and Response messages relating to a plurality of HTTP items being downloaded by a user; a logical obj ect generator arranged to create, upon receipt of each valid HTTP Response message relating to an HTTP item, an HTTP item object, the HTTP item object being associated with, and including information contained in, the HTTP Request and Response messages related to the HTTP item, the logical object generator being further arranged to link the created HTTP item objects hierarchically using information in the Referer fields of their associated HTTP Request messages, and the logical object generator being further arranged to group a plurality of linked HTTP item objects together if the time between the receipt of their associated valid HTTP Response messages does not exceed a given threshold.

Preferably, the logical object generator is arranged such that the grouping of the plurality of linked HTTP item objects is triggered by the hierarchical linking of a given number of HTTP item objects on a first level of the hierarchy, to an HTTP item object on a second level of the hierarchy, the first level being lower in the hierarchy than the second level.

Preferably, the logical object generator is further arranged to create a web page object for each group of HTTP item obj ects; and the logical obj ect generator is further arranged determine, for each web page object, a root HTTP item object, the root HTTP item object being defined as the HTTP item object having an associated HTTP Request message having been received before the HTTP Request messages associated with the other HTTP item objects in the group of HTTP item objects.

Preferably, the receiver is further arranged to receive an HTTP Request and Response message relating to a further HTTP item being downloaded by a user, and the logical object generator is also arranged to: create, upon receipt of a valid HTTP Response message relating to the further HTTP item, a further HTTP item object, the further HTTP item object being associated with, and including information contained in, the HTTP Request and Response messages related to the further HTTP item; link the further HTTP item object to a previously created HTTP item obj ect using the information in the Referer field of the HTTP Request message associated with the further HTTP item; and if the previously created HTTP item object is part of a group of HTTP item objects, associate the further HTTP item object to the web page object created in respect of the group of HTTP item objects if the time between the receipt of the last valid HTTP Response message in the group of HTTP item objects and the receipt of the valid HTTP Response message associated with the further HTTP item does not exceed the given threshold.

As will be appreciated, the present invention provides several advantages over the prior art. Using the present invention, it is possible to aggregate HTTP flows and bind them to user activities. Based on this aggregated information, it is also possible to determine temporal statistics related to Internet usage, thereby allowing determination of the time a given user spends on a specific web site, or the amount of bandwidth taken up by a given user activity, or even a given web site type.

The advantages of the present invention provide web monitoring software (e.g. parental control software or firewall software) with more information which in turn allows a level of control which is more tailored to users' needs. For example, a web monitoring tool in accordance with the present invention can define a maximum duration per day for web browsing on a given type of web site, such as a social networking web site, without having to prevent access to such types of website completely.

Moreover, the present invention is particularly advantageous within the context of Internet Service Provides (ISPs) capping monthly download limits. Using the present invention, it is possible to limit the monthly amount of information downloaded from a specific type of web site (e.g. music content provider); thereby ensuring that, for a given household, a specific amount of a monthly download limit will be reserved for web sites not related to music content providers.

Furthermore, the present invention can be applied to the development and execution of Quality of Service (QoS) rules. For example, in a Wireless Local Area Network (WLAN), content arriving from certain types of web site can be given priority over content arriving from other types of web site.

Other advantages and benefits of the present invention will become apparent from a consideration of the following description and accompanying drawings, in which:
FIGURE 1 is diagram representing a data communications network in which the present invention can be used;
FIGURE 2 is a functional block diagram of the HTTP analysis module in accordance with the present invention;
FIGURE 3 is a representation of the various logical objects which can be generated using the present invention;
FIGURE 4 is a representation of an HTTP item linking method in accordance with the present invention;
FIGURE 5 is a timing diagram representing data exchange and hierarchical linking of HTTP items in accordance with the present invention; and
FIGURE 6 is block diagram showing the hierarchical relationship between the HTTP item objects created in response to the loading of the HTTP items of FIGURE 5.

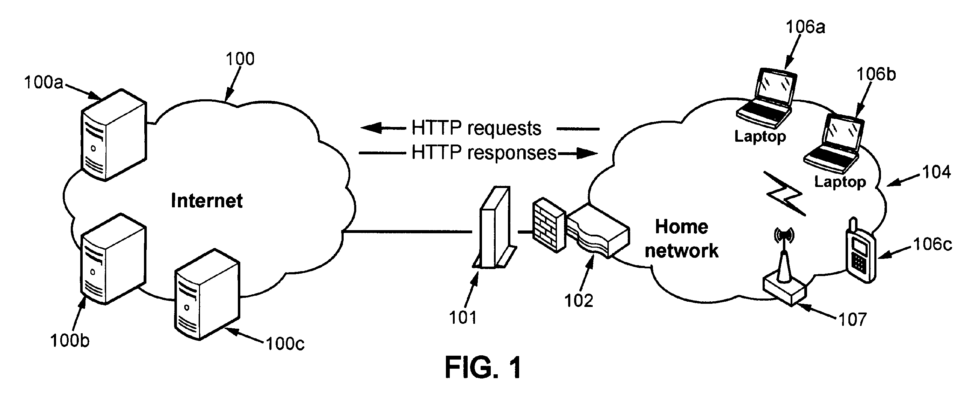

Figure 1 is diagram representing a data communications network in which the present invention can be used. An HTTP analysis module in accordance with the present invention is deployed on the network data path, between the Internet 100 and a Wireless Local Area Network (WLAN) 104. In the example of Figure 1, the WLAN 104 comprises a WLAN base station 107, a plurality of personal computers 106a, 106b, a Personal Digital Assistant (PDA) 106c and a router 102, which router is connected to the Internet 100 via the Optical Network Unit (ONU) 101 of an Internet Passive Optical Network (EPON). The router 102 can also comprise a firewall. In this example, the Internet 100 comprises web servers 100a, 100b, and 100c.

The present invention can be implemented on top of a Transmission Control Protocol/Internet Protocol (TCP/IP) stack in user terminals, such as personal computers 106a, 106b or PDA 106c. Advantageously, however, the HTTP analysis module of the present invention is implemented in router 102 in order to mutualise analysing resources for all users in the WLAN

The network diagram of Figure 1 is one of many examples of a network in which the present invention can be deployed. This network shown in Figure 1 therefore serves to illustrate the context within which the invention is to be used. It will be apparent to the skilled reader however that the present invention can be used with networks having different components and topologies to the example described with reference to Figure 1.

The analysis method of the HTTP analysis module is transparent to both WLAN users (also described herein as web clients) 106a, 106b and 106c and to web servers 100a, 100b and 100c, in that it is based on packet snooping (i.e. packets are received by the HTTP analysis module, analysed and forwarded without modification). The HTTP analysis module of the present invention can be coupled to additional modules, such as packet marking modules, which can change the Differentiated Services Code Point (DSCP) field in Internet Protocol version 4 (IPv4) headers. Packet marking allows Quality of Service (QoS) to be applied in the operator core network and the user home network. The HTTP analysis module can also be coupled to traffic logging modules, which categorise session traffic, typically for legal purposes. Advantageously, the HTTP analysis module of the present invention can be coupled to advanced Internet usage management and control modules, such as firewall and/or parental control software.

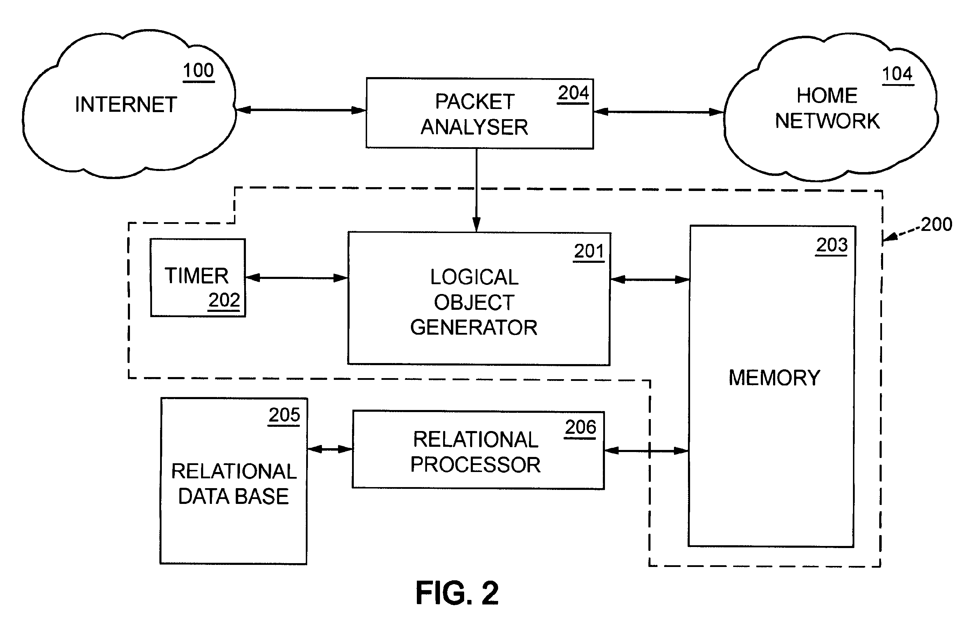

Figure 2 is a functional block diagram of the HTTP analyser module 200 in accordance with one embodiment of the present invention. The HTTP analyser module 200 is in communication with a packet analyser 204 (also known as a network analyser or packet sniffer), which intercepts incoming traffic, extracts information contained in HTTP Request and Response messages (see RFC 2616, HTTP 1.1, Section 4) and provides that information to a Logical Object Generator 201. The Logical Object Generator 201 has access to local clock information, via a timer module 202, which allows it to timestamp information and set timers relating to the creation and modification of logical objects, as described below. The logical objects are stored in a memory 203 and a can be modified or updated using new timer information and/or HTTP Request and Response information received from the timer module 202 and/or the packet analyser 204, respectively. In one embodiment of the invention, the HTTP analyser memory 203 is accessed by a relational processor 206, which is arranged to remove some information form the analyser memory 203 and aggregate information stored in the analyser memory 203 in accordance with the processes described below. The resulting aggregates of information can be stored in relational database 205.

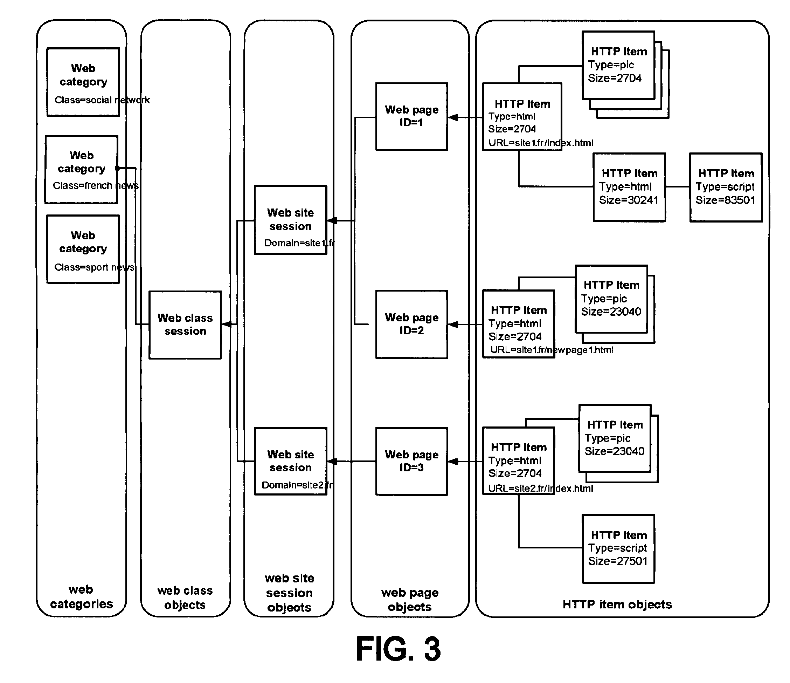

Figure 3 shows some of the logical objects that can be created within the memory of the HTTP analyser. Each logical object has several different data fields, which will vary with the type of object, as described below. The fields of the logical objects are filled in by the Logical Object Generator 201, as new packets are received (i.e. new HTTP Request/Response messages are received) and/or timer information is received from the timer (e.g. expiration of a particular timer), as also described below.

Logical objects can be hierarchically linked and may include information relating to other objects in order to maintain memory structure. Herein, the expression "logical object" is defined as a set of data relating to a web-based logical construct (e.g. web page, web site, HTTP item, etc). For example, an HTTP item object is a data set, stored in memory, which will contain information relating to a particular HTTP item.

In accordance with the HTTP protocol, a single web page can comprise several HTTP items, each of which being one of an image, html text, video, script, etc. A web page, for example, which is itself an HTTP item, can call (i.e. using HTTP Request/Response messages) other HTTP items located on different web servers, which other HTTP items can in turn themselves call other HTTP items, which are also on different web servers. The Logical Object Generator 20 1 creates an HTTP item obj ect for every valid HTTP item, that it to say for every HTTP item in respect of which an HTTP Response message, received from an HTTP server, contained an indication of a successful HTTP Request (e.g. "200 OK" status code, as defined in RFC 2616, HTTP 1.1, Section 10.2.1).

In RFC 2616, HTTP 1.1, Section 14.36, the "Referer" [*sic*] field is introduced into HTTP Requests. According to RFC 2616, the Referer request header field allows identification of the address (URI) of the resource from which the Request-URI was obtained. The Logical Object Generator 201 uses information in the Referer field to fill in some of the fields of the HTTP item objects, thereby allowing the Logical Object Generator 201 to link HTTP item objects together. This linking of HTTP item objects also allows the Logical Object Generator 201 to create a hierarchy of linked logical objects using HTTP item objects as the basic building blocks of the hierarchy.

In the example of Figure 3, the highest objects in the hierarchy are the web category objects. The lowest objects in the hierarchy are the HTTP items, which can themselves be arranged and linked hierarchically. The logical objects are stored in the analyser memory and are indexed using particular fields, as described below.

In the example shown in Figure 3, the first, lowest form of logical obj ect is an HTTP item object, which represents the transfer of a single HTTP item (e.g. html file, GIF or JPEG image, etc) to a given web client. The logical object relating to the HTTP item, the HTTP item object, includes several fields, as described below. HTTP item objects are indexed using the web client identifier field, which identifies a particular user, and the URL field of that item. HTTP items can also be hierarchically linked amongst themselves. For example, an HTTP item object relating to an html web page can be linked to "lower" HTTP item objects which relate to HTTP items embedded in that html web page.

An example of this in Figure 3 is the HTTP item object having a URL field equal to "www.sitel.fr/index.html", which is hierarchically linked to two HTTP item objects; the first being a image type (i.e. "Type=pic") HTTP item object and the second being another html type (i.e. "Type=html") HTTP item object. As can be seen in Figure 3, the second html type HTTP item object is itself linked to a script type (i.e. "Type=script") HTTP item object, which script type HTTP item object is therefore lower in the hierarchy of HTTP item objects than the second html type HTTP item object.

The next logical object in the hierarchy shown in Figure 3 is a web page object, which represents the transfer of a particular web page to a given web client. Web page objects are indexed using a web client identifier and a root HTTP item URL, which is found in the URL field of the highest HTTP item object to which that web page object is linked. The web site object represents a web site being browsed by a given web client and is indexed using the web client identifier and the domain of the web site.

The next logical object in the hierarchy is the web class object, which represents web sites browsed by a given web client and belonging to a given web category (e.g. sports news, French news, social network, etc.) during a given session. Web class objects are indexed using a web client identifier and a web category. The final logical object in the example of Figure 3 is the web category object, which represents a web category and is defined statically. Web category objects are indexed using their own names.

Herein, the terms "child" and "children" are defined as a logical object, or logical objects, respectively, which are linked to at least one logical object which is higher in the above defined hierarchy of logical objects. Conversely, the term "parent" is defined as a logical object which is linked to at least one logical object which is lower in the above-defined hierarchy of logical objects. As will be appreciated, a single logical object in accordance with the present invention can be defined as both a parent and a child.

Before describing the method used to link HTTP item objects to web page objects, details relating to the content and format of HTTP item objects and web page objects will now be described. In one embodiment of the present invention, an HTTP item object comprises the following fields:
**Item Identifier**: A unique identifier attributed to each new HTTP item obj ect generated by the logical object generator, upon receipt of an HTTP Request in respect of a new HTTP item. The Item Identifier is primarily used for linking HTTP item objects together in the analyser memory 203.
**Client Identifier**: A unique identifier (typically the IP address of a web client) used to identify the web client associated with the HTTP item. This information can be extracted from either the HTTP Request header (e.g. the "From" field containing the email address of the web client) or from the TCP handshake process of setting up the Request, which handshake process will require identification of the web client's IP address. In the below described embodiments of the present invention, only HTTP item objects having the same Client Identifier are linked together.
**Host**: A field that can be filled out using the information found in the Host field of the HTTP Request header, and relates to the domain name of the server on which the HTTP item is hosted (e.g. www.site1.fr).
**Item URI/URL**: A field which can be filled in using the URI found in the Request Line in the HTTP Request. Alternatively, the URI information can be concatenated with the Host information to determine the Item URL.
**Parent Item identifier:** The Item Identifier of the parent HTTP item object to which the HTTP item object is linked. This field can be blank if the HTTP item object is not linked to a parent HTTP item object. The Parent Item Identifier is found by first using the Referer header in the HTTP Request to determine the URL of the parent HTTP item. Then, using the HTTP item object information in the analyser memory, the URL is used to find the Item Identifier associated with that URL
**Root HTTP Item Identifier:** The Item Identifier of the highest HTTP item object in the genealogy of the HTTP item object (also known as the root HTTP item object). When the values found in the Item Identifier field and the Root HTTP Item Identifier field are equal, the HTTP item object is a root HTTP item object.
**Web Page Identifier**: The unique identifier of the web page object to which the HTTP item object is attached.
**Size**: A field in which the size of the HTTP item is recorded. The size of the HTTP item can be determined by extracting information from the Content-Length field in the HTTP Request and monitoring the volume of data carried by the TCP connection.
**Type of Content**: A field which indicates the Multipurpose Internet Mail Extension (MIME) type of the HTTP item. This information can be extracted from the HTTP Request header.
**Download Start Time**: Part of the information required to calculate the download time of the HTTP item. This field can be completed with a timestamp of a local clock used by the Logical Object Generator 201, the timestamp being representative of the time at which the Response message was received.
**Download End Time**: The second part of information required to calculate the download time of the HTTP item. This field can be completed by using a timestamp of a local clock used by the Logical Object Generator 201 and information received from the monitoring of the TCP connection.
**Children**: A field indicating the number of children linked to the HTTP item.

As mentioned above, the Logical Object Generator 201 creates an HTTP item object for every valid HTTP item, that it to say for every HTTP item in respect of which an HTTP Response message, received from an HTTP server, contained an indication of a successful HTTP request. As will be appreciated from the above, the HTTP item object can be created using information found in the HTTP Request message and/or information found in the HTTP Response message.

In the same embodiment, a web page object, to which a number of HTTP item objects are linked, comprises the following fields:
**Web Page Identifier**: A unique identifier attributed to each new page generated by the logical object generator. The Web Page Identifier is primarily used for linking web page objects together in the analyser memory.
**Client Identifier**: A unique identifier (typically the IP address of a web client) used to identify the web client associated with the HTTP item. This information can be extracted from either the HTTP Request header (e.g. the "From" field containing the email address of the web client) or from the TCP handshake process of setting up the Request, which handshake process will require identification of the web client's IP address.
**Root HTTP Item Identifier**: The Item Identifier of the highest HTTP item object linked to the web page object (also known as the root HTTP item object).
**Domain**: A field that can be filled using the information found in the Host field of the root HTTP item object, and relates to the domain name of the server on which the root HTTP item is hosted (e.g. www.site1.fr).
**Web Site Session Parent Identifier**: The identifier of the web site session object (described below) to which the web page object is linked.
**Download Start Time**: The time at which the root HTTP item associated with the root HTTP item object began being downloaded. Preferably, this value will be approximated by using the time at which the valid HTTP Response was received.
**Timer**: A timer used to determine whether HTTP item objects are to be linked to the web page object.

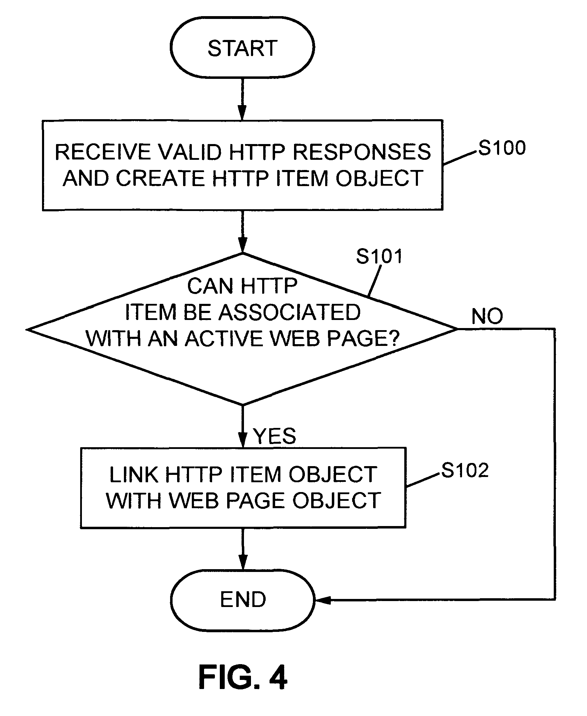

With reference to Figures 4 to 6, the method of creating HTTP item obj ects, creating web page objects, and linking HTTP item objects to web page objects in accordance with an embodiment of the present invention is described below.

In step S100 of the method shown in Figure 4, the downloading of a new HTTP item is detected by receipt of its associated Request and Response messages. Upon receipt of a HTTP Response message indicating that the associated HTTP Request was successful (e.g. "200 OK" status code, as defined in RFC 2616, HTTP 1.1, Section 10.2.1), a new HTTP item object is created in the analyser memory. Upon creation, not all fields in the HTTP item object are necessarily completed. For example, the Download End Time field can be completed at some point after the creation of the HTTP item object, by accessing and modifying the analyser memory. Moreover, further modification of the HTTP item object may be required to complete the Children field, the Web Page Identifier field and the Root HTTP Item Identifier field, for example.

In step S101, a determination is made as to whether or not the HTTP item object can be linked to a parent HTTP item object. As explained above, this is done using the Referer field of the HTTP Request message, and an internal lookup to find the Item Identifier of the parent HTTP item object.

If a parent is found, the Parent Item Identifier value of the HTTP item object is set to the Item Identifier of the parent HTTP item object. Moreover, the values in the Root HTTP Item Identifier field and the Web Page Identifier field of the HTTP item object are set to the values found in the Root HTTP Item Identifier field and the Web Page Identifier Field of the parent HTTP item object, respectively.

If no parent can be found, the Parent Item Identifier field and the Web Page Identifier field are set with a value indicating that the fields are invalid (i.e. no parent can be found and no web page can be found) and the Root HTTP Item Identifier field is set to the value of the HTTP item object's own Item Identifier, indicating that the HTTP item object is a root HTTP item obj ect.

In an alternate embodiment, the above process can be achieved using the Parent Item Identifier of the HTTP item obj ect, as well as the Parent Item Identifiers of the HTTP item objects of the parent, grandparent, etc of the HTTP item object, to find the nearest root HTTP item object in the hierarchy of HTTP item objects (also known as that HTTP item's genealogy).

In either embodiment, when a child HTTP item object is linked to a parent HTTP item object, the value in the Children field of the parent HTTP item object is incremented by 1.

An HTTP item object is linked to a web page object, as indicated in step S102, if the period elapsed between the receipt of the last HTTP item linked to that web page (found in the Timer field of the web page object) and the start of the HTTP item download (found in the "Download Start Time" field of the HTTP item object) is lower than a preset threshold. This threshold is known herein as the Maximum Delta Time. After expiry of the web page object's Maximum Delta Time, the web page object is removed from the analyser memory, thereby ceasing to be an "active" web page object; and thus no more HTTP item objects can be linked to it.

It can therefore be considered that the HTTP items which begin downloading after the expiration of the Maximum Delta Time related to a given web page will either belong to other web pages (and their HTTP item objects will therefore be linked to other web page objects found in the analyser memory), or will not form part of the hierarchy of logical objects.

Various methods of periodically removing unlinked, or "orphaned", HTTP item objects from the analyser memory will be readily apparent to the skilled reader.

Once a web page object is removed from the analyser memory, it can be sent, in its entirety, to the relational database/processor. Alternatively, a subset of the data found in the web page object can be sent to the relational database/processor, as described below.

Creation of a new web page object is triggered when an HTTP item object with at least two children cannot be bound to another HTTP item object. As described above, when an HTTP item object is linked to a parent HTTP item object, the Children field of the parent HTTP item object is incremented by 1. At this time, if the parent HTTP item object is not itself linked to a web page (i.e. it has an invalid Web Page Identifier value), and the value in its Children field passes from "1" to "2", then a new web page object is created, the Web Page Identifier field of the parent HTTP item object is set to the Web Page Identifier of the newly created web page object, and the Timer of the web page object is set. In this embodiment, the web page object is triggered by the linking of 2 children to an unlinked parent. In other embodiments however, the number of children needed required to trigger the creation of a web page object could be any integer positive integer. Each time a new HTTP item object is linked to the web page, the Timer of the web page object is reset. In other embodiments, a large number of HTTP item objects could be created in the analyser memory, and the creation of a web page could be triggered by some other means and at some other point in time (e.g. after the creation of a given number of HTTP item objects).

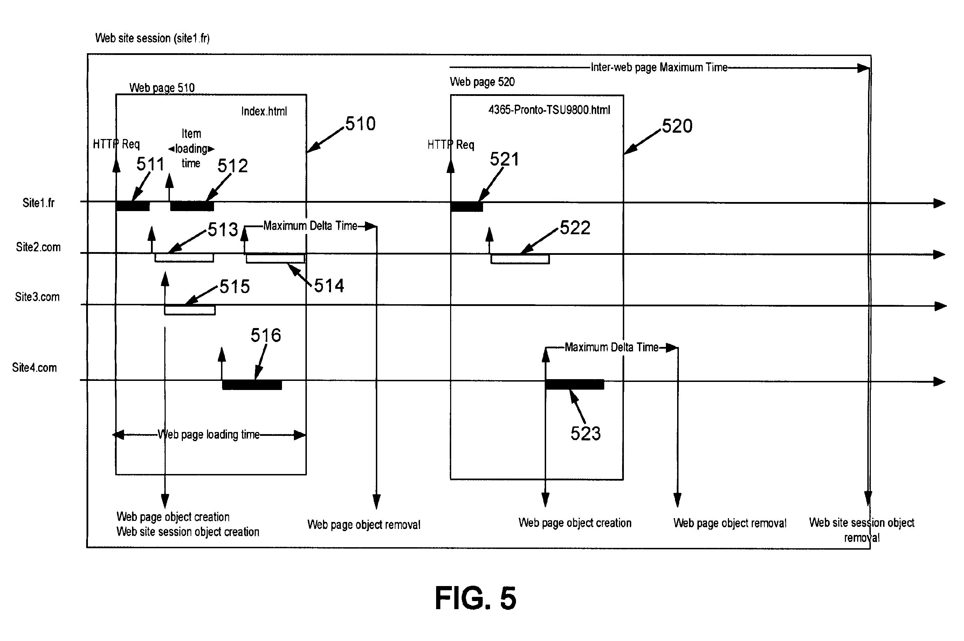

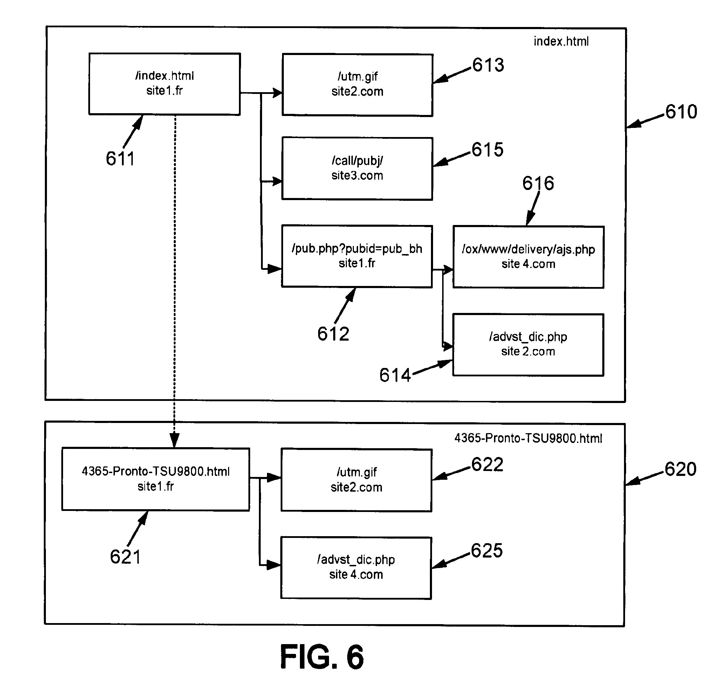

In reference to the example of Figures 5 and 6, the operation of an embodiment of the present invention is described below.

Figure 5 is a timing diagram representing data exchange and hierarchical linking of web pages 510 and 520, linked together in accordance with the present invention. As can be seen from Figure 5, a first HTTP item 511 is downloaded from www.sitel.fr. In this example, HTTP item 511 requests HTTP items 512, 513 and 515 from www.sitel.fr, www.site2.com, and www.site3.com. Then, HTTP item 512 requests HTTP items 514 and 516 from www.site2.com and www.site4.com, respectively. The lengths of the graphical representations of the HTTP items in Figure 5 represent their respective download times (also known as the item loading time). Similarly, HTTP item 521 requests HTTP items 522 and 523 from www.site2.com and www.site4.com, respectively. In the example of Figure 5, the receipt of valid Responses in respect of HTTP items 511 to 516 and 521 to 523 triggers the creation of associated HTTP item objects by the Logical Object Generator 201.

Figure 6 is a block diagram showing the hierarchical relationships between the HTTP item objects created in response to receipt of valid HTTP Responses for the HTTP items of Figure 5.

Upon receipt of a valid Response for HTTP item 511, new HTTP object 611 is created. Because the HTTP item object 611 is not linked to another HTTP item objet, its Web Page Identifier field is set to a value indicating that no web page object has been found (i.e. "invalid" value).

Then, when a valid Response for HTTP item 513 is received, new HTTP object 613 is created in respect of HTTP item 513. At this point, the Referer information in respect of the HTTP Request relating to the valid Response received for HTTP item 513 is used to determine the Parent Identifier of HTTP item object 613. This allows the linking of HTTP item object 613 to HTTP item object 611 by setting the Parent Identifier field the HTTP item object 613 to the value found in the Item Identifier field of the HTTP item object 611. At the same time, the Children field of HTTP item object 611 is incremented by 1.

This process is repeated when HTTP item 515 is received. Thus, HTTP item object 615 is generated and linked to HTTP item object 611 by setting the Parent Identifier field the HTTP item object 615 to the value found in the Item Identifier field of the HTTP item object 611. At the same time, the Children field of HTTP item obj ect 611 is incremented by 1. At this point, because HTTP item object 611 is not itself linked to a web page (i.e. it has an "invalid" Web Page Identifier value), and the value in its Children field passes from a value of 1 to 2, a new web page object 610 is created. The Root Item Identifier field of HTTP item object 611 is set to its own Item Identifier value, and the Root Item Identifier fields of HTTP item object 613 and 615 are set to the value in the Item Identifier field of HTTP item object 611. Moreover, the Web Page Identifier field of HTTP item objects 611, 613 and 615 is set to the value of Web Page Identifier field of the newly created web page object 610, and the Timer of the web page object 610 is set to the Maximum Delta Time.

In accordance with the above-described procedure, when HTTP item 512 is received, because HTTP item object 612 has a parent item (i.e. Parent Item Identifier of HTTP item object 612 is the Item Identifier of HTTP item object 611) that is linked to web page object 610, and because the valid Response in respect of HTTP item 512 is received before expiry of the Timer of web page object 610, HTTP item object 612 is linked to web page object 610. The Web Page Identifier field and the Root HTTP Item Identifier field of the newly-created HTTP item object 612 is therefore set to the values found in the Web Page Identifier field and the Root HTTP Item Identifier of HTTP item object 611. Moreover, upon creation of the HTTP item object 612, the Timer field of the web page object 610 is reset to the Maximum Delta Time.

A similar procedure is used to link HTTP item objects 614 and 616 to HTTP item object 612. Because the value of their Root HTTP Item Identifier and Web Page Identifier fields is taken from the Root HTTP Item Identifier and Web Page Identifier field of HTTP item obj ect 612, and because the valid Responses in respect of HTTP items 514 and 516 are received before expiry of the Timer of web page object 610, HTTP item objects 614 and 616 are linked to web page object 610. Each of the creations of HTTP item object 614 and HTTP item object 616 triggers the resetting of the Timer field of web page object 610 to the Maximum Delta Time.

As shown in Figure 5, once the receipt of HTTP item 514 triggers the resetting of the Timer field of web page object 610, no other HTTP item is received before expiration of the Timer. Accordingly, upon expiration of the Maximum Delta Time, web page object 610 is removed from the analyser memory and at least some of the information contained in the web page object 610 is sent to the relational processor 206 for processing.

The next HTTP item to arrive is HTTP item 521. Upon receipt of a valid HTTP Response associated with HTTP item 521, the Logic Object Generator 201 creates HTTP item object 621. In this example, because HTTP item 521 is requested through HTTP item 511 (e.g. HTTP item 521 is requested using a hypertext link found on HTTP item 511), the Referer field of the HTTP Request associated with HTTP item 521 contains information identifying HTTP item 511 as the parent of HTTP item 521. Because HTTP item object 611 has been removed from the analyser memory (along with its associated web page) however, the Parent Identifier field of the HTTP item object 621 is set as "invalid", and the Root Item Identifier field of HTTP item object 621 is set to its own Item Identifier value.

Then, when a valid Response for HTTP item 522 is received, new HTTP object 622 is created in respect of HTTP item 522. At this point, the Referer information in respect of the HTTP Request relating to the valid Response received for HTTP item 522 is used to determine the Parent Identifier of HTTP item object 622. This allows the linking of HTTP item obj ect 622 to HTTP item obj ect 621 by setting the Parent Identifier field of HTTP item obj ect 622 to the value found in the Item Identifier field of the HTTP item obj ect 621. At the same time, the Children field of HTTP item object 621 is incremented by 1.

This process is repeated when HTTP item 523 is received. Thus, HTTP item object 623 is generated and linked to HTTP item object 621 by setting the Parent Identifier field of HTTP item object 623 to the value found in the Item Identifier field of the HTTP item object 621. At the same time, the Children field of HTTP item object 621 is incremented by 1. At this point, because HTTP item object 621 is not itself linked to a web page (i.e. it has an "invalid" Web Page Identifier value), and the value in its Children field passes from a value of 1 to 2, a new web page object 620 is created. The Root Item Identifier field of HTTP item object 621 is set to its own Item Identifier value, and the Root Item Identifier fields of HTTP item object 622 and 623 are set to the value in the Item Identifier field of HTTP item object 621. Moreover, the Web Page Identifier field of HTTP item objects 621, 622 and 623 is set to the Web Page Identifier of the newly created web page object 620, and the Timer of the web page object 620 is set to the Maximum Delta Time.

As shown in Figure 5, once the receipt of HTTP item 523 triggers the resetting of the Timer field of web page object 620, no other HTTP item is received before expiration of the Maximum Delta Time. Accordingly, upon expiration of the Maximum Delta Time, web page object 620 is removed from the analyser memory and at least some of the information contained in the web page object 620 is sent to the relational processor 206 for processing.

As mentioned above, in one embodiment of the invention, when the Timer of a web page object is expired, information related to that web page object is sent to a relational processor, as shown in Figure 2. The information sent to the relational database can comprise the following:
**Client Identifier**: A unique identifier (typically the IP address of a web client) used to identify the web client associated with the HTTP item. This information can be extracted from the web page object or root HTTP item object.
**URL of the root HTTP item**: The Item Identifier of the highest HTTP item object linked to the web page object (also known as the root HTTP item object).
**Start Time of Download:** The time at which the root HTTP item associated with the root HTTP item object began being downloaded. Preferably, this value will be approximated by using the time at which the valid HTTP Response was received in respect of the root HTTP item.
**Duration of Web Page Download**: The time required to load the entire web page, as shown in Figure 5. This time can be determined by calculating the difference between the Download Start Time of the root HTTP item and the Download End Time of the last HTTP item linked to the web page object.
**Number of Items**: The number of objects linked to the web page object created in respect of the web page session.
**Distribution of Contents**: The sum of the sizes of the HTTP items associated with the web page session. This information can be extracted from the Size field in the HTTP item objects linked to the web page object related to the web page session.
**Web Site Session Identifier**: The identifier of the web site session object to which the web page object is linked.

A specific web page table in the relational database indexes all web page objects and statistics. Using the information in this table, the relational database can create a number of further hierarchical memory structures. For example, in one embodiment of the invention, using information stored in the relational database and the analyser memory, the relational processor can create web site session objects which are temporarily stored in the analyser memory. In other embodiments of the invention, web site session objects can be created by the Logical Object Generator 201.

Consecutive downloads of web pages by a single client from a single domain are grouped as a web site session, and can be represented by a web site session object. In order to be associated with a given web site session, a web page must be opened (or have a "Download Start Time") within a specific period of time associated with the web site session. In this example, each web site session object comprises the following fields:
**Web Site Identifier**: A unique identifier attributed to each new web site session.
**Domain**: A field that can be completed using the information found in the Domain field of web page objects linked to the web page session object, and relates to the domain name of the server on which the root HTTP items of the web page objects associated linked to the web site session (e.g. www.site1.fr).
**Time of Creation**: The time at which the first web page in the session begins downloading. This can be determined using the Download Start Time of the first root HTTP item linked to the web site session.
**Inter-Page Timer**: A timer used to measure the period of inactivity related to the web site session. It is reset to the "Inter-Page Maximum Time" every time a new web page object is associated to the web site session. The Inter-Page Maximum Time must be larger than the Maximum Delta Time. Upon expiration of the Inter-Page Timer, the web site session object is removed from the analyser memory.
**Client Identifier**: The client identifier associated with the web site pages of the web site session.
**Duration**: The time between the Download Start Time of the first HTTP item downloaded and the Download End Time of the last HTTP item downloaded within the web site session.
**Number of Web Pages**: The number of web page objects linked to the web site session object.
**Number of Items**: The number of HTTP item objects associated to the web site session object.
**Distribution of Contents**: The sum of the sizes of the HTTP items associated with the web site session. This information can be extracted from the Size field in the HTTP item objects of the web page objects linked to the web site session.
**Web Class ID**: An internal identifier attributed to a type of web site class (e.g. French news, sports, etc). This field can be completed using a number of known methods. One example of such method is matching the domain of the root HTTP item of the web page objects linked to the web site session object with a web site class in a database of domains indexed by web site class. In a preferred embodiment, such matching would comprise using a known longest prefix value matching algorithm which would, for example, match "sitel.fr" with "ads.sitel.com.au".

In the example of Figure 5, a new web site session obj ect is created upon creation of a web page object if the domain of the web page object cannot be found in a web site session object found in the analyser memory. In that case, the web page object is linked to the newly created web site session object, and the Inter Page-Timer is reset. A web page object is linked to an existing web site session object if its domain matches the domain of the web site session object and it is created prior to the expiration of the Inter-Page Timer. Again, in a preferred embodiment, such matching would comprise using a known longest prefix value matching algorithm which would, for example, match "sitel.fr" with "ads.sitel.com.au". Finally, a web site session object is removed from the analyser memory upon expiration of the Inter-Page Timer.

Once a web site session object is removed from the analyser memory (i.e. the Inter-Page Timer has expired), some or all of the information contained therein is exported to the relational database in order to populate a web site session table, which table indexes all web site session statistics.

Web sites can be classified using an external database that will group websites into categories (e.g. shopping, social networking, etc). Classification occurs upon creation of the web site session object and is based on the domain attached to the web site session. Classification is an expensive process in terms of resources because it requires access to a huge database that may not be located within the device in which the HTTP analyser is implemented. One of the advantages of this approach is that the classification process is performed only once for all HTTP item objects linked to a single web site session object, thereby reducing the number of accesses which need to be made to that database.

In an embodiment of the invention, web site session objects opened by a single client and classified in a single web site category are grouped together into a web class session object. The web class session object can comprise the following fields:
**Web Class ID:** An internal identifier attributed to a type of web site class.
**Web Category Identifier**: An internal statically-defined identifier relating to the category of web site (e.g. shopping, music content provider, etc).
**Creation Time**: The time at which the first web page in the session begins downloading. This can be determined using the Download Start Time of the first root HTTP item linked to the web class session.
**Web Class Session Timer**: A timer used to measure the period of inactivity related to the web class session. It is reset to the predetermined value every time a new web site session object is associated to the web class session object. Upon expiration of the Web Class Session Timer, the web class session object is removed from the analyser memory.
**Duration**: The time between the Download Start Time of the first HTTP item downloaded and the Download End Time of the last HTTP item downloaded within the web class session.
**Number of Web Site Sessions**: The number of web site session objects linked to the web class session object.
**Number of Web Pages**: The number of web page objects linked to the web class session object.
**Number of HTTP items**: The number of HTTP items linked to the web class session object.
**Distribution of Contents**: The sum of the sizes of the HTTP items associated with the web class session. This information can be extracted from the Size field in the HTTP item objects linked to the web class session object.

Similar rules to those required to create and maintain web site session objects are used to create and maintain web class session objects. Web site session objects related to a single client, classified in a single web site category and created within a set period of time are defined as being part of the same web class session. The time period is kept in the Web Class Session Timer. Because a single user can browse several web sites at any one time, that same single client may own several simultaneous web class sessions.

The following rules are applied to the maintenance of the active web class session objects in the analyser memory. A new web class session object is created upon creation of a web site session object whose class cannot be found in an already existing web class session. The web site session obj ect if then linked to the newly-created web class session obj ect, and the Web Class Session Timer is reset. Moreover, a web site session is added to an existing web class session if its class is the same as the class of the web class session object. The Web Class Session Timer if then reset. A web class session object is removed from the analyser memory upon expiration of the Web Class Session Timer.

As will be appreciated, the present invention can be used in conjunction with a wide variety of known system, such as, for example, firewalls and/or parental control systems.

Using the present invention, it is possible to aggregate HTTP flows and bind them to user activities. For example, using the information in the Distribution of Content field of a web class session object, it is possible to determine the volume of data downloaded for a particular class of web site and for a particular user. Thus, by managing access to the Internet using the present invention, it is possible both to precisely control the volume of data which a particular user, or group of users (e.g. a plurality of individuals in a family), can download during a particular web site session or from a particular web site, or class of web site. Furthermore, the present invention can be applied to the development and execution of Quality of Service (QoS) rules. For example, in a Wireless Local Area Network (WLAN), content arriving from certain types of web site can be given priority over content arriving from other types of web site.

As will be appreciated by the skilled reader, while the linking and grouping of logical objects in the above-described preferred embodiment are carried out in real time, it is also clear that the invention includes embodiments in which a large number of logical objects are created (or partially created) in memory before the linking and grouping steps are performed. These alternate embodiments are possible because each logical object created in the analyser memory contains enough information to link it to other logical objects and to group pluralities of logical objects together.

The skilled person will also realize that steps of various above-described methods can be performed by programmed computers. Accordingly the above-mentioned embodiments should be understood to cover storage devices containing machine-executable or computer-executable instructions to perform some or all of the steps of the above-described methods. The embodiments are also intended to cover computers programmed to perform the steps of the above-described methods.

The functionality of the elements shown in the Figures can be provided using either dedicated hardware and/or software. The expressions "processing", "processing means" and "processing module" can include, but is not limited to, any of digital signal processor (DSPs) hardware, network processors, application specific integrated circuits (ASICs), field programmable gate arrays (FPGAs), read only memories (ROMs) for storing software, random access memories (RAMs), and non volatile storage.

## Claims

1. A method of analysing information in a TCP/IP network (100), the method comprising:
receiving a plurality of HTTP Request and Response messages relating to a plurality of HTTP items being downloaded by a user;
creating, upon receipt of each valid HTTP Response message relating to an HTTP item, an HTTP item object, the HTTP item object being associated with, and including information contained in, the HTTP Request and Response messages related to the HTTP item;
linking the created HTTP item objects hierarchically using information in the Referer fields of their associated HTTP Request messages; and
grouping a plurality of linked HTTP item objects together if the time between the receipt of their associated valid HTTP Response messages does not exceed a given threshold.

2. The method of claim 1, wherein the grouping step is triggered by the hierarchical linking of a given number of HTTP item objects on a first level of the hierarchy, to an HTTP item object on a second level of the hierarchy, the first level being lower in the hierarchy than the second level.

3. The method of claim 1 or 2 further comprising the steps of:
creating a web page object for each group of HTTP item objects; and
determining, for each web page object, a root HTTP item object, the root HTTP item object being defined as the HTTP item object having an associated HTTP Request message having been received before the HTTP Request messages associated with the other HTTP item objects in the group of HTTP item objects.

4. The method of claim 3 further comprising the steps of:
receiving an HTTP Request and Response message relating to a further HTTP item being downloaded by the user;
creating, upon receipt of a valid HTTP Response message relating to the further HTTP item, a further HTTP item object, the further HTTP item object being associated with, and including information contained in, the HTTP Request and Response messages related to the further HTTP item;
linking the further HTTP item object to a previously created HTTP item object using the information in the Referer field of the HTTP Request message associated with the further HTTP item; and
if the previously created HTTP item object is part of a group of HTTP item objects, associating the further HTTP item object to the web page object created in respect of the group of HTTP item objects if the time between the receipt of the last valid HTTP Response message in the group of HTTP item objects and the receipt of the valid HTTP Response message associated with the further HTTP item does not exceed the given threshold.

5. The method of any of claims 3 or 4 further comprising the steps of:
extracting domain information from the Host field of the HTTP Request message associated with each root HTTP item object;
grouping a plurality of created web page objects together if:
the Host fields of the HTTP Request messages associated with the root HTTP items of the plurality of web page objects contain matching information; and
the valid HTTP Response messages associated with the root HTTP item objects of the plurality of web pages are received within a given period of time; and creating a web site session object for each group of web page objects.

6. The method of claim 5 further comprising the steps of:
associating the web site session object to a class of web site by matching the contents of the domain information of root HTTP item objects of the plurality of web page objects to a domain value in a web class database, the web class database comprising a plurality of domain values grouped by class of web site.

7. The method of claim 5, further comprising the steps of:
grouping the web site session objects which share the same web class; and
created a web class session object for each group of web site session objects.

8. The method of any of the proceedings claims, wherein at least part of the HTTP item objects, the web page objects, the web site session objects and the web class session objects are sent to a relational database (205) and part of the preceding steps are performed by the relational database.

9. The method of any of the proceeding claims, wherein:
each HTTP item object comprises an indication of the volume of data comprised in its associated HTTP item; and
each of the web page objects, the web site session objects and the web class session objects comprise a total of the volumes of data indicated in the HTTP item objects to which they are hierarchically linked.

10. The method of claim 9 comprising the steps of:
determining the total volume of data associated with a web class session; and
limiting the amount of data transferred from a domain associated with the web class if the total volume of data exceeds a given threshold.

11. A computer program product for a data-processing device, the computer program product comprising a set of instructions which, when loaded into the data-processing device, causes the device to perform the steps of the method as claimed in the claims 1 to 10.

12. A system for analysing information in a TCP/IP network (100), the system comprising:
a receiver arranged to receive a plurality of HTTP Request and Response messages relating to a plurality of HTTP items being downloaded by a user;
a logical object generator (201) arranged to create, upon receipt of each valid HTTP Response message relating to an HTTP item, an HTTP item object, the HTTP item object being associated with, and including information contained in, the HTTP Request and Response messages related to the HTTP item,
the logical object generator being further arranged to link the created HTTP item objects hierarchically using information in the Referer fields of their associated HTTP Request messages, and
the logical object generator being further arranged to group a plurality of linked HTTP item objects together if the time between the receipt of their associated valid HTTP Response messages does not exceed a given threshold.

13. The system of claim 12, wherein the logical object generator (201) is arranged such that the grouping of the plurality of linked HTTP item objects is triggered by the hierarchical linking of a given number of HTTP item objects on a first level of the hierarchy, to an HTTP item object on a second level of the hierarchy, the first level being lower in the hierarchy than the second level.

14. The system of any of claims 12 or 13 further, wherein:
the logical object generator (201) is further arranged to create a web page object for each group of HTTP item objects; and
the logical object generator is further arranged determine, for each web page object, a root HTTP item object, the root HTTP item object being defined as the HTTP item object having an associated HTTP Request message having been received before the HTTP Request messages associated with the other HTTP item objects in the group of HTTP item objects.

15. The system of claim 14, wherein,
the receiver is further arranged to receive an HTTP Request and Response message relating to a further HTTP item being downloaded by a user, and
the logical object generator (201) is also arranged to:
create, upon receipt of a valid HTTP Response message relating to the further HTTP item, a further HTTP item object, the further HTTP item object being associated with, and including information contained in, the HTTP Request and Response messages related to the further HTTP item;
link the further HTTP item object to a previously created HTTP item object using the information in the Referer field of the HTTP Request message associated with the further HTTP item; and
if the previously created HTTP item object is part of a group of HTTP item objects, associate the further HTTP item object to the web page object created in respect of the group of HTTP item objects if the time between the receipt of the last valid HTTP Response message in the group of HTTP item objects and the receipt of the valid HTTP Response message associated with the further HTTP item does not exceed the given threshold.

## Patentansprüche

1. Verfahren zum Analysieren von Informationen in einem TCP/IP-Netzwerk (100), wobei das Verfahren das Folgende umfasst:
Empfangen mehrerer HTTP-Anforderungs- und HTTP-Antwortmeldungen, welche sich auf mehrere HTTP-Elemente beziehen, die von einem Benutzer heruntergeladen werden;
Erzeugen eines HTTP-Element-Objekts nach dem Empfang jeder gültigen HTTP-Antwortmeldung, die sich auf ein HTTP-Element bezieht, wobei das HTTP-Element-Objekt mit Informationen verbunden ist und diese umfasst, die in den HTTP-Anforderungs- und HTTP-Antwortmeldungen enthalten sind, die sich auf das HTTP-Element beziehen;
hierarchisches Verbinden der erzeugten HTTP-Element-Objekte unter Verwendung von Informationen in den Referer-Feldern ihrer zugehörigen HTTP-Anforderungsmeldungen und
Zusammengruppieren mehrerer verbundener HTTP-Element-Objekte, wenn die Zeit zwischen dem Empfang ihrer zugehörigen gültigen HTTP-Antwortmeldungen einen vorgegebenen Schwellenwert nicht überschreitet.

2. Verfahren nach Anspruch 1, wobei der Gruppierungsschritt durch das hierarchische Verbinden einer vorgegebenen Anzahl an HTTP-Element-Objekten auf einer ersten Ebene der Hierarchie mit einem HTTP-Element-Objekt auf einer zweiten Ebene der Hierarchie ausgelöst wird, wobei die erste Ebene in der Hierarchie niedriger als die zweite Ebene ist.

3. Verfahren nach Anspruch 1 oder 2, welches ferner die folgenden Schritte umfasst:
Erzeugen eines Web-Seiten-Objekts für jede Gruppe von HTTP-Element-Objekten und
Bestimmen eines Stamm-HTTP-Element-Objekts für jedes Web-Seiten-Objekt, wobei das Stamm-HTTP-Element-Objekt als das HTTP-Element-Objekt definiert ist, welches eine zugehörige HTTP-Anforderungsmeldung aufweist, die vor den HTTP-Anforderungsmeldungen empfangen worden ist, die zu den anderen HTTP-Element-Objekten in der Gruppe von HTTP-Element-Objekten gehören.

4. Verfahren nach Anspruch 3, welches ferner die folgenden Schritte umfasst:
Empfangen einer HTTP-Anforderungs- und HTTP-Antwortmeldung, welche sich auf ein weiteres HTTP-Element bezieht, das von dem Benutzer heruntergeladen wird;
Erzeugen eines weiteren HTTP-Element-Objekts nach dem Empfang einer gültigen HTTP-Antwortmeldung, die sich auf das weitere HTTP-Element bezieht, wobei das weitere HTTP-Element-Objekt mit Informationen verbunden ist und diese umfasst, die in den HTTP-Anforderungs- und HTTP-Antwortmeldungen enthalten sind, die sich auf das weitere HTTP-Element beziehen;
Verbinden des weiteren HTTP-Element-Objekts mit einem zuvor erzeugten HTTP-Element-Objekt unter Verwendung der Informationen in dem Bezugsfeld der HTTP-Anforderungsmeldung, die zu dem weiteren HTTP-Element gehört; und
wenn das zuvor erzeugte HTTP-Element-Objekt Teil einer Gruppe von HTTP-Element-Objekten ist, Verbinden des weiteren HTTP-Element-Objekts mit dem Web-Seiten-Objekt, das in Bezug auf die Gruppe von HTTP-Element-Objekten erzeugt wird, wenn die Zeit zwischen dem Empfang der letzten gültigen HTTP-Antwortmeldung in der Gruppe von HTTP-Element-Objekten und dem Empfang der gültigen HTTP-Antwortmeldung, die zu dem weiteren HTTP-Element gehört, den vorgegebenen Schwellenwert nicht überschreitet.

5. Verfahren nach Anspruch 3 oder 4, welches ferner die folgenden Schritte umfasst:
Extrahieren von Domäneninformationen aus dem Host-Feld der HTTP-Anforderungsmeldung, die zu jedem Stamm-HTTP-Element-Objekt gehört;
Zusammengruppieren mehrerer erzeugter Web-Seiten-Objekte, wenn:
die Host-Felder der HTTP-Anforderungsmeldungen, die zu den Stamm-HTTP-Elementen der mehreren Web-Seiten-Objekte gehören, zueinander passende Informationen enthalten und
die gültigen HTTP-Antwortmeldungen, die zu den Stamm-HTTP-Element-Objekten der mehreren Web-Seiten gehören, innerhalb einer vorgegebenen Zeitperiode empfangen werden; und
Erzeugen eines Web-Seiten-Sitzungsobjekts für jede Gruppe von Web-Seiten-Objekten.

6. Verfahren nach Anspruch 5, welches ferner die folgenden Schritte umfasst:
Verbinden des Web-Seiten-Sitzungsobjekts mit einer Web-Seiten-Klasse durch In-Übereinstimmung-Bringen der Inhalte der Domäneninformationen von Stamm-HTTP-Element-Objekten der mehreren Web-Seiten-Objekte mit einem Domänenwert in einer Web-Klassen-Datenbank, wobei die Web-Klassen-Datenbank mehrere Domänenwerte umfasst, die nach Web-Seiten-Klassen gruppiert sind.

7. Verfahren nach Anspruch 5, welches ferner die folgenden Schritte umfasst:
Gruppieren der Web-Seiten-Sitzungsobjekte, welche dieselbe Web-Klasse aufweisen; und
Erzeugen eines Web-Klassen-Sitzungsobjekts für jede Gruppe von Web-Seiten-Sitzungsobjekten.

8. Verfahren nach einem der vorhergehenden Ansprüche, wobei zumindest ein Teil der HTTP-Element-Objekte, der Web-Seiten-Objekte, der Web-Seiten-Sitzungsobjekte und der Web-Klassen-Sitzungsobjekte an eine relationale Datenbank (205) gesendet wird und ein Teil der vorhergehenden Schritte durch die relationale Datenbank durchgeführt wird.

9. Verfahren nach einem der vorhergehenden Ansprüche, wobei:
jedes HTTP-Element-Objekt eine Anzeige des Datenvolumens umfasst, das in seinem zugehörigen HTTP-Element enthalten ist; und
jedes der Web-Seiten-Objekte, der Web-Seiten-Sitzungsobjekte und der Web-Klassen-Sitzungsobjekte einen Gesamtwert der Datenvolumina umfasst, die in den HTTP-Element-Objekten angezeigt werden, mit welchen sie hierarchisch verbunden sind.

10. Verfahren nach Anspruch 9, welches die folgenden Schritte umfasst:
Bestimmen des Gesamtdatenvolumens, das zu einer Web-Klassen-Sitzung gehört; und
Begrenzen der Datenmenge, die von einer Domäne übertragen wird, die zu der Web-Klasse gehört, wenn das Gesamtdatenvolumen einen vorgegebenen Schwellenwert überschreitet.

11. Computerprogrammprodukt für eine Datenverarbeitungseinheit, wobei das Computerprogrammprodukt einen Satz von Befehlen umfasst, welche, wenn sie in die Datenverarbeitungseinheit geladen werden, bewirken, dass die Einheit die Schritte des Verfahrens nach Anspruch 1 bis 10 durchführt.

12. System zum Analysieren von Informationen in einem TCP/IP-Netzwerk (100), wobei das System das Folgende umfasst:
einen Empfänger, welcher dafür eingerichtet ist, mehrere HTTP-Anforderungs- und HTTP-Antwortmeldungen zu empfangen, welche sich auf mehrere HTTP-Elemente beziehen, die von einem Benutzer heruntergeladen werden;
einen Generator für logische Objekte (201), welcher dafür eingerichtet ist, nach dem Empfang jeder gültigen HTTP-Antwortmeldung, die sich auf ein HTTP-Element bezieht, ein HTTP-Element-Objekt zu erzeugen, wobei das HTTP-Element-Objekt mit Informationen verbunden ist und diese umfasst, die in den HTTP-Anforderungs- und HTTP-Antwortmeldungen enthalten sind, die sich auf das HTTP-Element beziehen, wobei der Generator für logische Objekte ferner dafür eingerichtet ist, die erzeugten HTTP-Element-Objekte unter Verwendung von Informationen in den Referer-Feldern ihrer zugehörigen HTTP-Anforderungsmeldungen hierarchisch zu verbinden, und
wobei der Generator für logische Objekte ferner dafür eingerichtet ist, mehrere verbundene HTTP-Element-Objekte zusammen zu gruppieren, wenn die Zeit zwischen dem Empfang ihrer zugehörigen gültigen HTTP-Antwortmeldungen einen vorgegebenen Schwellenwert nicht überschreitet.

13. System nach Anspruch 12, wobei der Generator für logische Objekte (201) so eingerichtet ist, dass das Gruppieren der mehreren verbundenen HTTP-Element-Objekte durch das hierarchische Verbinden einer vorgegebenen Anzahl an HTTP-Element-Objekten auf einer ersten Ebene der Hierarchie mit einem HTTP-Element-Objekt auf einer zweiten Ebene der Hierarchie ausgelöst wird, wobei die erste Ebene in der Hierarchie niedriger als die zweite Ebene ist.

14. System nach Anspruch 12 oder 13, wobei:
der Generator für logische Objekte (201) ferner dafür eingerichtet ist, ein Web-Seiten-Objekt für jede Gruppe von HTTP-Element-Objekten zu erzeugen; und
der Generator für logische Objekte ferner dafür eingerichtet ist, für jedes Web-Seiten-Objekt ein Stamm-HTTP-Element-Objekt zu bestimmen, wobei das Stamm-HTTP-Element-Objekt als das HTTP-Element-Objekt definiert ist, welches eine zugehörige HTTP-Anforderungsmeldung aufweist, die vor den HTTP-Anforderungsmeldungen empfangen worden ist, die zu den anderen HTTP-Element-Objekten in der Gruppe von HTTP-Element-Objekten gehören.

15. System nach Anspruch 14, wobei
der Empfänger ferner dafür eingerichtet ist, eine HTTP-Anforderungs- und HTTP-Antwortmeldung zu empfangen, welche sich auf ein weiteres HTTP-Element bezieht, das von dem Benutzer heruntergeladen wird, und
der Generator für logische Objekte (201) außerdem für das Folgende eingerichtet ist:
Erzeugen eines weiteren HTTP-Element-Objekts nach dem Empfang einer gültigen HTTP-Antwortmeldung, die sich auf das weitere HTTP-Element bezieht, wobei das weitere HTTP-Element-Objekt mit Informationen verbunden ist und diese umfasst, die in den HTTP-Anforderungs- und HTTP-Antwortmeldungen enthalten sind, die sich auf das weitere HTTP-Element beziehen;
Verbinden des weiteren HTTP-Element-Objekts mit einem zuvor erzeugten HTTP-Element-Objekt unter Verwendung der Informationen in dem Referer-Feld der HTTP-Anforderungsmeldung, die zu dem weiteren HTTP-Element gehört; und
wenn das zuvor erzeugte HTTP-Element-Objekt Teil einer Gruppe von HTTP-Element-Objekten ist, Verbinden des weiteren HTTP-Element-Objekts mit dem Web-Seiten-Objekt, das in Bezug auf die Gruppe von HTTP-Element-Objekten erzeugt wird, wenn die Zeit zwischen dem Empfang der letzten gültigen HTTP-Antwortmeldung in der Gruppe von HTTP-Element-Objekten und dem Empfang der gültigen HTTP-Antwortmeldung, die zu dem weiteren HTTP-Element gehört, den vorgegebenen Schwellenwert nicht überschreitet.

## Revendications

1. Procédé d'analyse d'informations dans un réseau TCP/IP (100), le procédé comprenant les étapes suivantes :
réception d'une pluralité de messages de demande et de réponse HTTP relatifs à une pluralité d'éléments HTTP en cours de téléchargement par un utilisateur ;
création, à la réception de chaque message de réponse HTTP valide relatif à un élément HTTP, d'un objet élément HTTP, l'objet élément HTTP étant associé aux messages de demande et de réponse HTTP relatifs à l'élément HTTP et incluant des informations contenues dans les messages de demande et de réponse HTTP relatifs à l'élément HTTP ;
liaison hiérarchique des objets éléments HTTP créés à l'aide d'informations dans le champ Referer de leurs messages de demande HTTP ; et
regroupement d'une pluralité d'objets éléments HTTP liés si le temps entre la réception de leurs messages de réponse HTTP valides associés n'excède pas un seuil donné.

2. Procédé selon la revendication 1, dans lequel l'étape de regroupement est déclenchée par la liaison hiérarchique d'un nombre donné d'objets éléments HTTP sur un premier niveau de la hiérarchie à un objet élément HTTP sur un second niveau de la hiérarchie, le premier niveau étant plus bas dans la hiérarchie que le second niveau.

3. Procédé selon la revendication 1 ou 2, comprenant en outre les étapes suivantes :
création d'un objet page Web pour chaque groupe d'objets éléments HTTP ; et
détermination, pour chaque objet page Web, d'un objet élément HTTP racine, l'objet élément HTTP racine étant défini en tant qu'objet élément HTTP ayant un message de demande HTTP associé qui a été reçu avant les messages de demande HTTP associés aux autres objets éléments HTTP dans le groupe d'objets éléments HTTP.

4. Procédé selon la revendication 3, comprenant en outre les étapes suivantes :
réception d'un message de demande et de réponse HTTP relatif à un autre élément HTTP en cours de téléchargement par l'utilisateur ;
création, à la réception d'un message de réponse HTTP valide relatif à l'autre élément HTTP, d'un autre objet élément HTTP, l'autre objet élément HTTP étant associé aux messages de demande et de réponse HTTP relatifs à l'autre élément HTTP et comprenant des informations contenues dans lesdits messages de demande et de réponse HTTP ;
liaison de l'autre objet élément HTTP à un objet élément HTTP créé au préalable à l'aide des informations dans le champ Référent du message de demande HTTP associé à l'autre élément HTTP ; et
si l'objet élément HTTP créé au préalable fait partie d'un groupe d'objets éléments HTTP, association de l'autre objet élément HTTP à l'objet page Web créé en ce qui concerne le groupe d'objets éléments HTTP si le temps entre la réception du dernier message de réponse HTTP valide dans le groupe d'objets éléments HTTP et la réception du message de réponse HTTP valide associé à l'autre élément HTTP n'excède pas le seuil donné.

5. Procédé selon l'une quelconque des revendications 3 ou 4 comprenant en outre les étapes suivantes :
extraction des informations de domaine du champ Hôte du message de demande HTTP associé à chaque objet élément HTTP racine ;
regroupement d'une pluralité d'objets pages Web créés si :
- les champs Host des messages de demande HTTP associés aux éléments HTTP racines de la pluralité d'objets pages Web contiennent des informations concordantes ; et
- les messages de réponse HTTP associés aux objets éléments HTTP racines de la pluralité de pages Web sont reçus durant une période de temps donnée ; et création d'un objet session de site Web pour chaque groupe d'objets pages Web.

6. Procédé selon la revendication 5, comprenant en outre les étapes suivantes :
association de l'objet session de site Web à une classe de site Web par mise en concordance des contenus des informations de domaine d'objets éléments HTTP racines de la pluralité d'objets pages Web à une valeur de domaine dans une base de données de classes Web, la base de données de classes Web comprenant la pluralité de valeurs de domaine groupées par classe de site Web.

7. Procédé selon la revendication 5, comprenant en outre les étapes suivantes :
regroupement des objets sessions de site Web qui partagent la même classe Web ;
et création d'un objet session de classe Web pour chaque groupe d'objets sessions de site Web.

8. Procédé selon l'une quelconque des revendications précédentes, dans lequel au moins une partie des objets éléments HTTP, des objets pages Web, des objets sessions de site Web et des objets sessions de classe Web sont envoyés à une base de données relationnelle (205) et une partie des étapes précédentes sont réalisées par la base de données relationnelle.

9. Procédé selon l'une quelconque des revendications précédentes, dans lequel :
chaque objet élément HTTP comprend une indication du volume de données compris dans son élément HTTP associé ; et
chacun des objets pages Web, des objets sessions de site Web et des objets sessions de classe Web comprend un total des volumes de données indiqués dans les objets éléments HTTP auxquels ils sont hiérarchiquement liés.

10. Procédé selon la revendication 9, comprenant les étapes suivantes :
détermination du volume total de données associé à une session de classe Web ; et
limitation du nombre de données transférées d'un domaine associé à la classe Web si le volume total de données excède un seuil donné.

11. Produit-programme d'ordinateur pour un dispositif de traitement de données, le produit-programme d'ordinateur comprenant un ensemble d'instructions qui, lorsqu'elles sont chargées dans le dispositif de traitement de données, font en sorte que le dispositif réalise les étapes du procédé selon les revendications 1 à 10.

12. Système d'analyse d'informations dans un réseau TCP/IP (100), le système comprenant :
un récepteur agencé pour recevoir une pluralité de messages de demande et de réponse HTTP relatifs à une pluralité d'éléments HTTP en cours de téléchargement par un utilisateur ;
un générateur d'objets logiques (201) agencé pour créer, à la réception de chaque message de réponse HTTP valide relatif à un élément HTTP, un objet élément HTTP,
l'objet élément HTTP étant associé aux messages de demande et de réponse HTTP relatifs à l'élément HTTP et comportant des informations contenues dans lesdits messages de demande et de réponse HTTP,
le générateur d'objets logiques étant en outre agencé pour lier hiérarchiquement les objets éléments HTTP créés à l'aide d'informations dans le champ Referer de leurs messages de demande HTTP associés, et
le générateur d'objets logiques étant en outre agencé pour regrouper une pluralité d'objets éléments HTTP liés si le temps entre la réception de leurs messages de réponse HTTP valides associés n'excède pas un seuil donné.

13. Système selon la revendication 12, dans lequel le générateur d'objets logiques (201) est agencé de sorte que le regroupement de la pluralité d'objets éléments HTTP liés soit déclenché par la liaison hiérarchique d'un nombre donné d'objets éléments HTTP sur un premier niveau de la hiérarchie à un objet élément HTTP sur un second niveau de la hiérarchie, le premier niveau étant plus bas dans la hiérarchie que le second niveau.

14. Système selon l'une quelconque des revendications 12 ou 13, dans lequel :
le générateur d'objets logiques (201) est en outre agencé pour créer un objet page Web pour chaque groupe d'objets éléments HTTP ; et
le générateur d'objets logiques est en outre agencé pour déterminer, pour chaque objet page Web, un objet élément HTTP racine, l'objet élément HTTP racine étant défini en tant que l'objet élément HTTP ayant un message de demande HTTP associé qui a été reçu avant les messages de demande HTTP associés aux autres objets éléments HTTP dans le groupe d'objets éléments HTTP.

15. Système selon la revendication 14, dans lequel,
le récepteur est en outre agencé pour recevoir un message de demande et de réponse HTTP relatif à un autre élément HTTP en cours de téléchargement par un utilisateur ; et
le générateur d'objets logiques (201) est également agencé pour :
créer, à la réception d'un message de réponse HTTP valide relatif à l'autre élément HTTP, un autre objet élément HTTP, l'autre objet élément HTTP étant associé aux messages de demande et de réponse HTTP relatifs à l'autre élément HTTP et comportant des informations contenues dans lesdits messages de demande et de réponse HTTP ;
lier l'autre objet élément HTTP à un objet élément HTTP créé au préalable à l'aide des informations dans le champ Referer du message de demande HTTP associé à l'autre élément HTTP ; et
si l'objet élément HTTP créé au préalable fait partie d'un groupe d'objets éléments HTTP, associer l'autre objet élément HTTP à l'objet page Web créé en ce qui concerne le groupe d'objets éléments HTTP si le temps entre la réception du dernier message de réponse HTTP valide dans le groupe d'objets éléments HTTP et la réception du message de réponse HTTP valide associé à l'autre élément HTTP n'excède pas le seuil donné.
